# EUROPÄISCHE PATENTSCHRIFT

(11) **EP 3 099 858 B1**
(45) Veröffentlichungstag und Bekanntmachung des Hinweises auf die Patenterteilung: **13.03.2019**
(21) Anmeldenummer: 15700630.5
(22) Anmeldetag: 03.01.2015
(51) Int. Cl.: E01B 27/00, G01G 19/04

(54) **VERFAHREN ZUM BELADEN EINES GLEISBAUFAHRZEUGES SOWIE GLEISBAUFAHRZEUG**
METHOD FOR LOADING A RAILWAY VEHICLE AND RAILWAY VEHICLE
PROCÉDÉ POUR CHARGER UN VÉHICULE DE CONSTRUCTION DE VOIES FERROVIAIRES ET VÉHICULE DE CONSTRUCTION DE VOIES FERROVIAIRES

(30) Priorität: 30.01.2014 AT 632014
(43) Veröffentlichungstag der Anmeldung: 07.12.2016
(73) Patentinhaber: Plasser & Theurer Export von Bahnbaumaschinen Gesellschaft m.b.H., 1010 Wien (AT)
(72) Erfinder: BLECHINGER, Thomas, Virginia Beach, VA 23452 (US)
(86) Internationale Anmeldenummer: PCT/EP2015/000002
(87) Internationale Veröffentlichungsnummer: WO 2015/113726

(56) Entgegenhaltungen:
- EP-A1- 2 679 967
- US-B2- 7 192 238

## Beschreibung

Die Erfindung betrifft ein Verfahren zum Beladen eines Gleisbaufahrzeuges mit Schüttgut, wobei dieses nach Bildung eines Schüttkegels mit einer definierten Schüttguthöhe hₛ in einer Transport- bzw. Fahrzeuglängsrichtung relativ zu einem Schüttgutspeicher von einer Beladestelle wegbewegt und ein neuer Schüttkegel gebildet wird. Die Erfindung betrifft außerdem ein Gleisbaufahrzeug.

Durch EP 0 429 713 oder US 7 192 238 ist bereits ein Gleisbaufahrzeug bekannt, das im Arbeitseinsatz mit einer beliebigen Anzahl gleichartiger Fahrzeuge zu einem Verladezug gekuppelt werden kann. Im bezüglich einer Transportrichtung der Förderbänder hinteren Bereich des Schüttgutspeichers jedes Gleisbaufahrzeuges ist eine Tasteinrichtung angeordnet, die als Lichtschranke oder als mechanischer Taster ausgebildet ist und beim Speicherungsvorgang das Erreichen einer maximalen Befüllungshöhe überwacht.

Zur Ermittlung einer Zuladungsmasse ist es bekannt, Dehnmessstreifen an einem Drehgestell anzuordnen, vgl. DE 20 2013 102 362. EP 2 679 967 offenbart ein Gleisfahrzeug mit einem auf gleisverfahrbaren Schienenfahrwerken abgestützten Fahrzeugrahmen, wobei jedes Schienenfahrwerk folgende Merkmale aufweist: ein Drehgestellrahmen ist zur Lagerung von zwei in einer Längsrichtung voneinander distanzierten Radsätzen vorgesehen, b) der Drehgestellrahmen setzt sich aus zwei bezüglich einer Rotationsachse der Radsätze voneinander distanzierten, je ein Achslager zur Lagerung eines Radsatzes aufweisenden Rahmenlängsträgern zusammen, c) die beiden Rahmenlängsträger sind zwischen den beiden Radsätzen durch einen Rahmenquerträger miteinander verbunden, d) auf dem Drehgestellrahmen sind Dehnmessstreifen zum Erfassen einer Rahmendurchbiegung angeordnet, wobei auf jedem Rahmenlängsträger jeweils ein Dehnmessstreifen angeordnet ist.

Die Aufgabe der vorliegenden Erfindung liegt nun in der Schaffung eines Verfahrens der eingangs genannten Art sowie eines Gleisbaufahrzeuges, mit dem eine optimale Beladung möglich ist.

Diese Aufgabe wird erfindungsgemäß mit einem Verfahren bzw. Gleisbaufahrzeug der gattungsgemäßen Art durch die im Kennzeichen von Anspruch 1 bzw. 4 oder 7 angeführten Merkmale gelöst.

Mit einem derartigen Verfahren bzw. einem derartigen Gleisbaufahrzeug ist es in besonders wirtschaftlicher Weise möglich, jeweils in Abhängigkeit von einer bei der Beladung vorherrschenden Schüttgutdichte eine maximale Befüllung zu erzielen. Dabei ist immer sichergestellt, dass mit der Zuladung eine maximal zulässige Lastgrenze nicht überschritten wird.

Weitere Vorteile der Erfindung ergeben sich aus den weiteren Patentansprüchen und der Zeichnungsbeschreibung.

Im Folgenden wird die Erfindung anhand in der Zeichnung dargestellter Ausführungsbeispiele näher beschrieben. Es zeigen: Fig. 1 eine Seitenansicht eines aus zwei Gleisbaufahrzeugen zusammengesetzten Verladezuges, Fig. 2 und 3 jeweils eine vergrößerte und vereinfachte Draufsicht auf ein Schienenfahrwerk des Gleisbaufahrzeuges.

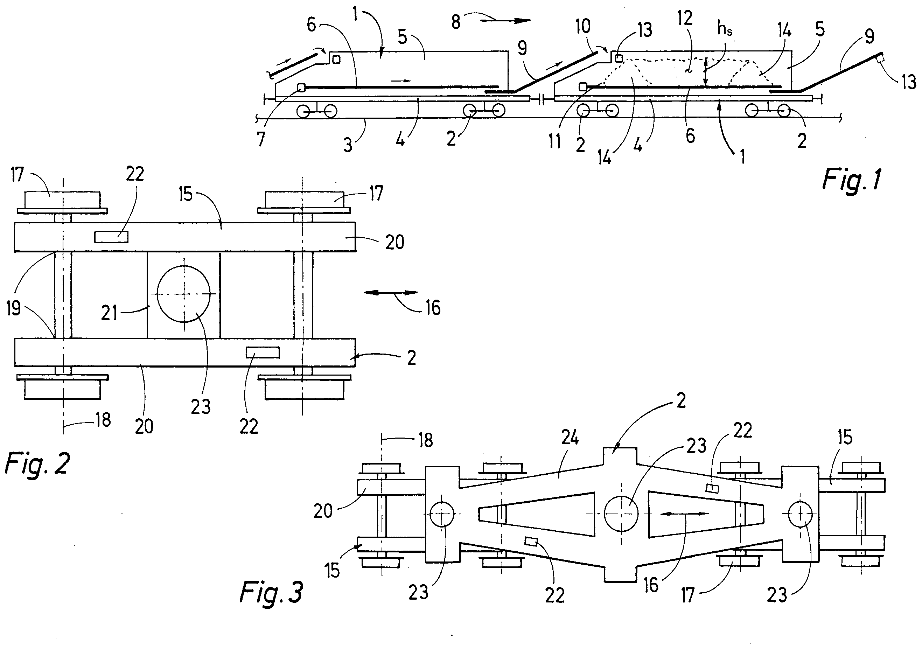

In Fig. 1 dargestellte Gleisbaufahrzeuge 1 bestehen jeweils im Wesentlichen aus einem - über zwei Schienenfahrwerke 2 auf einem Gleis 3 verfahrbaren - Fahrzeugrahmen 4 und einem mit diesem verbundenen Schüttgutspeicher 5. Ein in Wagenlängsrichtung verlaufendes Bodenförderband 6 bildet die Bodenfläche des Schüttgutspeichers 5 und weist einen Antrieb 7 für eine Bandbewegung in einer Transportrichtung 8 auf. Am bezüglich dieser Transportrichtung 8 vorderen Ende des Schüttgutspeichers 5 ist ein Übergabeförderband 9 vorgesehen, das unterhalb eines Abwurfendes des Bodenförderbandes 6 an dieses anschließend am Fahrzeugrahmen 4 gelagert ist. Das Übergabeförderband 9 ist schräg nach oben führend über ein vorderes Ende des Fahrzeugrahmens 4 vorkragend ausgebildet sowie mit einem Antrieb ausgestattet.

Durch Kupplungseinrichtungen ist eine beliebige Anzahl von gleichartig ausgebildeten Gleisbaufahrzeugen 1 zu einem auf dem Gleis 3 verfahrbaren, selbst be- und entladbaren Verladezug zusammenstellbar. Dabei wird ein von einer Übergabestelle 10 auf eine Beladestelle 11 des Bodenförderbandes 6 abgeworfenes Schüttgut 12 gespeichert. Im Bereich der Übergabestelle 10 ist eine berührungslose Tasteinrichtung 13 vorgesehen, die zur laufenden Erfassung einer Schüttguthöhe hₛ und des Volumens eines sich im Bereich der Beladestelle 11 bildenden Schüttkegels 14 dient.

Das in Fig. 2 vergrößert und vereinfacht dargestellte Schienenfahrwerk 2 weist einen zur Lagerung von zwei in einer Längsrichtung 16 voneinander distanzierten Radsätzen 17 vorgesehen Drehgestellrahmen 15 auf. Dieser setzt sich aus zwei bezüglich einer Rotationsachse 18 der Radsätze 17 voneinander distanzierten, je ein Achslager 19 zur Lagerung eines Radsatzes 17 aufweisenden Rahmenlängsträgern 20 zusammen. Diese sind mittig zwischen den beiden Radsätzen 17 durch einen Rahmenquerträger 21 miteinander verbunden.

Auf jedem Rahmenlängsträger 20 ist jeweils zwischen dem Rahmenquerträger 21 und dem Achslager 19 des angrenzenden Radsatzes 17 ein Dehnmessstreifen 22 angeordnet. Auf jedem Rahmenlängsträger 20 ist jedoch lediglich ein einziger Dehnmessstreifen 22 vorgesehen, wobei die beiden Dehnmessstreifen 22 in einer parallel zur Rotationsachse 18 verlaufenden Querrichtung gesehen zueinander versetzt positioniert sind. Die Signale der beiden Dehnmessstreifen 22 werden in einem Messverstärker zusammengeführt, um einen Mittelwert der Dehnung zu erhalten. Die Dehnmessstreifen 22 sind vorzugsweise an der Unterseite jedes Rahmenlängsträgers 20 befestigt. Mittig auf dem Rahmenquerträger 21 ist eine Drehpfanne 23 bzw. ein Drehzapfen für eine Verbindung mit dem Fahrzeugrahmen 4 vorgesehen.

Jeder Dehnmessstreifen 22 ist an einer Stelle des Längsträgers 20 befestigt, an der ein in Längsrichtung 16 des Rahmenlängsträgers 20 verlaufender, ein Minimum an quer verlaufenden Krafteinwirkungen aufweisender Hauptkraftfluss mit parallel zueinander verlaufenden Spannungslinien vorhanden ist, in welchem die Schubspannungen zu null werden. Das bedeutet, dass die Kraftflussrichtung eindeutig nur in einer Richtung verläuft, ohne "störende" (Schub)Krafteinflüsse aus anderen Richtungen, die das Messergebnis des Dehnmessstreifens 22 beeinflussen würden.

Die bestmögliche Positionierung des Dehnmessstreifens 22 wird mittels Finite-Elemente-Methode für jedes einzelne Schienenfahrwerk 2 bestimmt. Dadurch wird einerseits die richtige Positionierung und andererseits ein Maximum an Genauigkeit gewährleistet.

In Fig. 3 ist eine Variante eines für besonders hohe Lasten geeigneten Schienenfahrwerkes 2 dargestellt. Dieses setzt sich aus zwei in Längsrichtung 16 voneinander distanzierten Drehgestellrahmen 15 der bereits in Fig. 2 beschriebenen Bauart zusammen. Beide Drehgestellrahmen 15 sind durch einen Drehzapfen 23 gelenkig mit einer Rahmenbrücke 24 verbunden, die eine zwischen den Drehzapfen 23 der Drehgestellrahmen 15 positionierte zentrale Drehpfanne 23 zur Verbindung mit dem Fahrzeugrahmen 4 aufweist.

Auf der Rahmenbrücke 24 ist zwischen deren zentraler Drehpfanne 23 und dem benachbarten Drehzapfen 23 des angrenzenden Drehgestellrahmens 15 jeweils ein Dehnmessstreifen 22 angeordnet. Auf der Rahmenbrücke sind insgesamt lediglich zwei Dehnmessstreifen 22 angeordnet, wobei diese in einer parallel zur Rotationsachse 18 verlaufenden Querrichtung gesehen zueinander versetzt positioniert sind. Durch diese Versetzung der Dehnmessstreifen 22 kann die Fahrzeugneigung bei einer Gleisüberhöhung kompensiert werden.

Grundsätzlich ist es im Rahmen des erfindungsgemäßen Verfahrens auch möglich, die durch die Beladung verursachte Krafteinwirkung auf das Schienenfahrwerk 2 zur Ermittlung der Zuladungsmasse auch durch andere bekannte Methoden zu erfassen, beispielsweise durch Messung der Federkomprimierung oder durch Anordnung von Dehnmessstreifen auf der Fahrwerksfederung.

Im Folgenden wird das erfindungsgemäße Verfahren insbesondere in Verbindung mit Fig. 1 näher beschrieben. Das bezüglich der Transportrichtung 8 vordere Gleisbaufahrzeug 1 befindet sich in einem Beladezustand, indem das Bodenförderband 6 nicht bewegt wird. Über das an das hintere Ende angrenzende Übergabeförderband 9 des angrenzenden hinteren Gleisbaufahrzeuges 1 erfolgt ein Abwurf von Schüttgut, wodurch sich ein ständig wachsender Schüttkegel 14 ergibt.

Über eine permanente Erfassung der Schüttguthöhe hₛ durch die Tasteinrichtung 13 wird das Volumen Vₛ des Schüttkegels 14 berechnet. Zur Kompensation asymmetrischer Beladung, z.B. bei Gleisüberhöhungen, ist der Einsatz von zwei in Fahrzeugquerrichtung voneinander distanzierten Tasteinrichtungen vorteilhaft, die alternativ auch am oberen Ende des Übergabeförderbandes 9 positionierbar sind.

Parallel dazu wird an dem das Gleisfahrzeug 1 abstützenden Schienenfahrwerk 2 eine durch die Beladung verursachte Krafteinwirkung gemessen und damit die Masse mₛ des Schüttkegels 14 berechnet.

Mit einer aus dem Volumen Vₛ und der Masse mₛ berechneten Schüttgutdichte wird - in Relation zu einer maximal zulässigen Gesamtlademasse mₘₐₓ für das Gleisfahrzeug 1 - die maximale Schütthöhe bzw. der maximale Füllgradₕₓ des Schüttkegels 14 berechnet. Sobald die maximalle Schütthöhe erreicht ist, wird automatisch der Antrieb des Bodenförderbandes 6 aktiviert, wodurch der Schüttkegel 14 von der Beladestelle 11 weg in Transportrichtung 8 relativ zum Schüttgutspeicher 5 nach vorne bewegt wird.

Dieser Vorgang wird solange wiederholt, bis der ursprünglich erste Schüttkegel 14 das vordere Ende des Bodenförderbandes 6 erreicht hat. Diese schrittweise Bewegung des Bodenförderbandes 6 wird automatisch derart gesteuert, dass mit der vollständigen Beladung des Schüttgutspeichers 5 die maximal zulässige Gesamtlademasse mₘₐₓ erreicht wird.

Damit kann die Ladekapazität optimal ausgenutzt werden, ohne dass es dabei zu einer unzulässigen Überschreitung der Achslast bzw. zu einer schädlichen Überlastung des Gleisbaufahrzeuges kommt. Außerdem kann damit eine optimale Verteilung des gespeicherten Schüttgutes über die gesamte Länge des Schüttgutspeichers 5 sichergestellt werden.

Das Erreichen der maximal zulässigen Beladung wird dem Bediener optisch und akustisch am Gleisbaufahrzeug 1 angezeigt. Im Falle einer Überladung kann ergänzend unter Zuhilfenahme eines fix am Fahrzeug montierten Telematik-Moduls eine Textnachricht automatisch an eine oder mehrere zuvor definierte Telefonnummern versandt werden. Durch in jedem Fahrzeug integrierte GPS- Empfänger ist die Arbeitsrichtung des Fahrzeugs ermittelbar, auch besteht die Möglichkeit, die aktuelle Zuladungsmasse sowie etwaige Überschreitungen an einen mittels GPS bestimmten Ort eindeutig zu koppeln.

## Patentansprüche

1. Verfahren zum Beladen eines Gleisbaufahrzeuges (1) mit Schüttgut, wobei dieses nach Bildung eines Schüttkegels (14) mit einer definierten Schüttguthöhe hₛ in einer Transport- bzw. Fahrzeuglängsrichtung (8) relativ zu einem Schüttgutspeicher (5) von einer Beladestelle (11) wegbewegt und ein neuer Schüttkegel (14) gebildet wird, **gekennzeichnet durch** folgende Verfahrensschritte:
a) unter Zuhilfenahme der Schüttguthöhe hₛ wird ein Volumen Vₛ des im Bereich der Beladestelle (11) gebildeten Schüttkegels (14) berechnet,
b) an einem das Gleisfahrzeug (1) abstützenden Schienenfahrwerk (2) wird eine durch die Beladung verursachte Krafteinwirkung gemessen und damit die Masse mₛ des Schüttkegels (14) berechnet,
c) mit einer aus dem Volumen Vₛ und der Masse mₛ berechneten Schüttgutdichte wird - in Relation zu einer maximal zulässigen Gesamtlademasse mₘₐₓ für das Gleisfahrzeug (1) - die maximale Schütthöhe des Schüttkegels (14) berechnet und wahlweise einer Bedienungskraft angezeigt, und/oder die Wegbewegung des Schüttgutes von der Beladestelle (11) wird zur Erzielung der maximal zulässigen Gesamtlademasse mₘₐₓ automatisch gesteuert.

2. Verfahren nach Anspruch 1, **dadurch gekennzeichnet, dass** nach Erreichen der maximal zulässigen Lademasse mₘₐₓ sowohl die Weiterbewegung des Schüttgutes als auch die Beladung automatisch gestoppt wird.

3. Verfahren nach Anspruch 1 oder 2, **dadurch gekennzeichnet, dass** eine aus der Beladung resultierende Krafteinwirkung durch Messung einer Durchbiegung im Schienenfahrwerk (2) erfasst wird.

4. Gleisbaufahrzeug mit einem auf gleisverfahrbaren Schienenfahrwerken (2) abgestützten Fahrzeugrahmen (4) und einem mit diesem verbundenen Schüttgutspeicher (5) zum Speichern eines von einer Übergabestelle (10) auf eine Beladestelle (11) des Schüttgutspeichers (5) abgeworfenen Schüttguts (12), sowie im Bereich der Übergabestelle (10) mit einer berührungslosen Tasteinrichtung (13) zur laufenden Erfassung einer Schüttguthöhe hₛ und des Volumens eines sich im Bereich der Beladesteile (11) bildenden Schüttkegels (14), wobei jedes Schienenfahrwerk (2) folgende Merkmale aufweist:
a) ein Drehgestellrahmen (15) ist zur Lagerung von zwei in einer Längsrichtung (16) voneinander distanzierten Radsätzen (17) vorgesehen,
b) der Drehgestellrahmen (15) setzt sich aus zwei bezüglich einer Rotationsachse (18) der Radsätze (17) voneinander distanzierten, je ein Achslager (19) zur Lagerung eines Radsatzes (17) aufweisenden Rahmenlängsträgern (20) zusammen,
c) die beiden Rahmenlängsträger (20) sind zwischen den beiden Radsätzen (17) durch einen Rahmenquerträger (21) miteinander verbunden,
d) auf dem Drehgestellrahmen (15) sind Dehnmessstreifen (22) zum Erfassen einer Rahmendurchbiegung angeordnet, wobei auf jedem Rahmenlängsträger (20) jeweils zwischen dem Rahmenquerträger (21) und dem Achslager (19) des angrenzenden Radsatzes (17) ein Dehnmessstreifen (22) angeordnet ist.

5. Gleisbaufahrzeug nach Anspruch 4, **dadurch gekennzeichnet, dass** auf jedem Rahmenlängsträger (20) lediglich ein einziger Dehnmessstreifen (22) vorgesehen ist, wobei die beiden Dehnmessstreifen (22) in einer parallel zur Rotationsachse (18) verlaufenden Querrichtung gesehen zueinander versetzt positioniert sind.

6. Gleisbaufahrzeug nach Anspruch 4 oder 5, **dadurch gekennzeichnet, dass** der Dehnmessstreifen (22) an einer Stelle des Rahmenlängsträgers (20) befestigt wird, an der ein in Längsrichtung des Rahmenlängsträgers (20) verlaufender, ein Minimum an quer verlaufenden Krafteinwirkungen aufweisender Hauptkraftfluss vorhanden ist.

7. Gleisbaufahrzeug mit einem auf gleisverfahrbaren Schienenfahrwerken (2) abgestützten Fahrzeugrahmen (4) und einem mit diesem verbundenen Schüttgutspeicher (5) zum Speichern eines von einer Übergabestelle (10) auf eine Beladestelle (11) des Schüttgutspeichers (5) abgeworfenen Schüttguts (12), sowie im Bereich der Übergabestelle (10) mit einer berührungslosen Tasteinrichtung (13) zur laufenden Erfassung einer Schüttguthöhe hₛ und des Volumens eines sich im Bereich der Beladesteile (11) bildenden Schüttkegels (14), wobei jedes Schienenfahrwerk (2) folgende Merkmale aufweist:
a) ein Drehgestellrahmen (15) ist zur Lagerung von zwei in einer Längsrichtung (16) voneinander distanzierten Radsätzen (17) vorgesehen,
b) der Drehgestellrahmen (15) setzt sich aus zwei bezüglich einer Rotationsachse (18) der Radsätze (17) voneinander distanzierten, je ein Achslager (19) zur Lagerung eines Radsatzes (17) aufweisenden Rahmenlängsträgern (20) zusammen,
c) die beiden Rahmenlängsträger (20) sind zwischen den beiden Radsätzen (17) durch einen Rahmenquerträger (21) miteinander verbunden,
d) zwei bezüglich der Längsrichtung (16) voneinander distanzierte Drehgestellrahmen (15) sind jeweils durch einen Drehzapfen (23) mit einer Rahmenbrücke (24) verbunden, die eine zwischen den Drehzapfen (23) der Drehgestellrahmen (15) positionierte zentrale Drehpfanne (23) zur Verbindung mit dem Fahrzeugrahmen (4) aufweist,
e) zum Erfassen einer Rahmendurchbiegung sind Dehnmessstreifen (22) vorgesehen, wobei auf der Rahmenbrücke (24) jeweils zwischen der zentralen Drehpfanne (23) und dem benachbarten Drehzapfen (23) des angrenzenden Drehgestellrahmens (15) ein Dehnmessstreifen (22) angeordnet ist.

8. Gleisbaufahrzeug nach Anspruch 7, **dadurch gekennzeichnet, dass** auf der Rahmenbrücke (24) lediglich zwei Dehnmessstreifen (22) angeordnet sind, wobei die beiden Dehnmessstreifen (22) in einer parallel zur Rotationsachse (18) verlaufenden Querrichtung gesehen zueinander versetzt positioniert sind.

## Claims

1. A method of loading a track maintenance vehicle (1) with bulk material, wherein the latter - after forming a dump cone (14) having a defined bulk material height hₛ - is moved relative to a bulk material container (5) away from a loading point (11) in a transport- or longitudinal direction (8) of the vehicle and a new dump cone (14) is formed, **characterized by the following method steps:**
a) with the aid of the bulk material height hₛ, a volume Vₛ of the dump cone (14) formed in the area of the loading point (11) is calculated,
b) a force effect caused by the loading is measured at an on-track undercarriage (2) supporting the track maintenance vehicle (1), and with this the mass mₛ of the dump cone (14) is calculated,
c) with a bulk material density calculated from the volume Vₛ and the mass mₛ, the maximal dumping height of the dump cone (14) is calculated - in relation to a maximal allowable total loading mass mₘₐₓ for the track maintenance vehicle (1) - and optionally indicated to an operator, and/or the movement of the bulk material away from the loading point (11) is controlled automatically for achieving the maximal allowable total loading mass mₘₐₓ.

2. A method according to claim 1, **characterized in that**, after reaching the maximal allowable loading mass mₘₐₓ, both the onward movement of the bulk material as well as the loading operation is automatically stopped.

3. A method according to claim 1 or 2, **characterized in that** a force effect resulting from the loading is detected by measuring a deflection in the on-track undercarriage (2).

4. A track maintenance vehicle having a vehicle frame (4), supported on on-track undercarriages (2) mobile on a track, and a bulk material container (5), connected to the vehicle frame (4), for storing a bulk material (12) discharged from a transfer point (10) to a loading point (11) of the bulk material container (5), and also having a non-contact sensor device (13) in the region of the transfer point (10) for continuous detection of a bulk material height hₛ and of the volume of a dump cone (14) forming in the area of the loading point (11), wherein each on-track undercarriage (2) includes the following features:
a) a bogie frame (15) is provided for supporting two wheel sets (17) spaced from one another in a longitudinal direction (16),
b) the bogie frame (15) is composed of two longitudinal frame beams (20) which are spaced from one another with regard to an axis of rotation (18) of the wheel sets (17) and each have an axle bearing (19) for supporting a wheel set (17),
c) the two longitudinal frame beams (20) are connected to one another between the two wheel sets (17) by means of a transverse frame beam (21),
d) strain gauges (22) for detecting a frame deflection are arranged on the bogie frame (15), wherein a respective strain gauge (22) is arranged on each longitudinal frame beam (20) between the transverse frame beam (21) and the axle bearing (19) of the adjoining wheel set (17) in each case.

5. A track maintenance vehicle according to claim 4, **characterized in that** only a single strain gauge (22) is provided on each longitudinal frame beam (20), wherein the two strain gauges (22) are positioned offset to one another as seen in a transverse direction extending parallel to the axis of rotation (18).

6. A track maintenance vehicle according to claim 4 or 5, **characterized in that** the strain gauge (22) is fastened at a point of the longitudinal frame beam (20) at which a main power flow is present which extends in the longitudinal direction of the longitudinal frame beam (20) and has a minimum of transversely extending force reactions.

7. A track maintenance vehicle having a vehicle frame (4), supported on on-track undercarriages (2) mobile on a track, and a bulk material container (5) connected thereto for storing a bulk material (12) discharged from a transfer point (10) to a loading point (11) of the bulk material container (5), and also having a non-contact sensor device (13) in the region of the transfer point (10) for continuous detection of a bulk material height hₛ and of the volume of a dump cone (14) forming in the area of the loading point (11), wherein each on-track undercarriage (2) includes the following features:
a) a bogie frame (15) is provided for supporting two wheel sets (17) spaced from one another in a longitudinal direction (16),
b) the bogie frame (15) is composed of two longitudinal frame beams (20) which are spaced from one another with regard to an axis of rotation (18) of the wheel sets (17) and each have an axle bearing (19) for supporting a wheel set (17),
c) the two longitudinal frame beams (20) are connected to one another between the two wheel sets (17) by means of a transverse frame beam (21),
d) two bogie frames (15) spaced from one another with regard to the longitudinal direction (16) are connected in each case via a bogie pivot (23) to a frame bridge (24) which has a central swivel ring (23), positioned between the bogie pivots (23) of the bogie frames (15), for connection to the vehicle frame (4),
e) strain gauges (22) are provided for detecting a frame deflection, wherein a respective strain gauge (22) is arranged on the frame bridge (24) between the central swivel ring (23) and the adjacent bogie pivot (23) of the adjoining bogie frame (15) in each case.

8. A track maintenance vehicle according to claim 7, **characterized in that** only two strain gauges (22) are arranged on the frame bridge (24), wherein the two strain gauges (22) are positioned offset to one another as seen in a transverse direction extending parallel to the axis of rotation (18).

## Revendications

1. Procédé de chargement d'un véhicule de pose de voie (1) avec de la marchandise en vrac, dans lequel celle-ci est déplacée d'un point de chargement (11) après formation d'un cône déversé (14) avec une hauteur de marchandise en vrac définie h_{S} dans une direction longitudinale de transport ou de véhicule (8) par rapport à un réservoir de marchandise en vrac (5) et un nouveau cône déversé (14) est formé, **caractérisé par les étapes de procédé suivantes :**
a) un volume V_{S} du cône déversé (14) formé dans la région du point de chargement (11) est calculé à l'aide de la hauteur de marchandise en vrac h_{S},
b) un effet de force provoqué par le chargement est mesuré au niveau d'un mécanisme de roulement ferroviaire (2) soutenant le véhicule ferroviaire (1) et la masse m_{S} du cône déversé (14) est ainsi calculée,
c) la hauteur déversée maximale du cône déversé (14) est calculée avec une densité de marchandise en vrac calculée à partir du volume V_{S} et de la masse m_{S} en relation avec une masse de chargement totale maximale autorisée mₘₐₓ pour le véhicule ferroviaire (1) et affichée sélectivement à un opérateur, et/ou le déplacement de la marchandise en vrac du point de chargement (11) est automatiquement commandé pour l'obtention de la masse de chargement totale maximale autorisée mₘₐₓ.

2. Procédé selon la revendication 1, **caractérisé en ce qu'**aussi bien la poursuite du déplacement de la marchandise en vrac que le chargement sont automatiquement stoppés après atteinte de la masse de chargement maximale autorisée mₘₐₓ.

3. Procédé selon la revendication 1 ou 2, **caractérisé en ce qu'**un effet de force résultant du chargement est détecté par mesure d'une flexion dans le mécanisme de roulement ferroviaire (2).

4. Véhicule de pose de voie avec un châssis de véhicule (4) soutenu sur des mécanismes de roulement ferroviaires (2) pouvant être déplacés sur une voie et un réservoir de marchandise en vrac (5) connecté à celui-ci pour le stockage d'une marchandise en vrac (12) déchargée d'un point de transfert (10) sur un point de chargement (11) du réservoir de marchandise en vrac (5), ainsi que dans la région du point de transfert (10) avec un capteur sans contact (13) pour la détection continue d'une hauteur de marchandise en vrac h_{S} et du volume d'un cône déversé (14) se formant dans la région du point de chargement (11),
dans lequel chaque mécanisme de roulement ferroviaire (2) présente les caractéristiques suivantes :
a) un châssis de bogie (15) est prévu pour le logement de deux paires de roues (17) écartées l'une de l'autre dans une direction longitudinale (16),
b) le châssis de bogie (15) se compose de deux longerons de châssis (20) écartés l'un de l'autre par rapport à un axe de rotation (18) des paires de roues (17), présentant chacun un coussinet d'essieu (19) pour le logement d'une paire de roues (17),
c) les deux longerons de châssis (20) sont connectés l'un à l'autre entre les deux paires de roues (17) par une traverse de châssis (21),
d) des extensomètres à résistance (22) sont disposés sur le châssis de bogie (15) pour la détection d'une flexion de châssis, dans lequel un extensomètre à résistance (22) est à chaque fois disposé sur chaque longeron de châssis (20) entre la traverse de châssis (21) et le coussinet d'essieu (19) de la paire de roues adjacente (17).

5. Véhicule de pose de voie selon la revendication 4, **caractérisé en ce qu'**un extensomètre à résistance unique (22) est seulement prévu sur chaque longeron de châssis (20), dans lequel les deux extensomètres à résistance (22) sont positionnés de manière décalée l'un par rapport à l'autre vus dans une direction transversale s'étendant parallèlement à l'axe de rotation (18).

6. Véhicule de pose de voie selon la revendication 4 ou 5, **caractérisé en ce que** l'extensomètre à résistance (22) est fixé à un point du longeron de châssis (20) auquel un flux de force principal s'étendant dans la direction longitudinale du longeron de châssis (20), présentant un minimum d'effets de force s'étendant transversalement est présent.

7. Véhicule de pose de voie avec un châssis de véhicule (4) soutenu sur des mécanismes de roulement ferroviaires (2) pouvant être déplacés sur une voie et un réservoir de marchandise en vrac (5) connecté à celui-ci pour le stockage d'une marchandise en vrac (12) déchargée d'un point de transfert (10) sur un point de chargement (11) du réservoir de marchandise en vrac (5), ainsi que dans la région du point de transfert (10) avec un capteur sans contact (13) pour la détection continue d'une hauteur de marchandise en vrac hs et du volume d'un cône déversé (14) se formant dans la région du point de chargement (11),
dans lequel chaque mécanisme de roulement ferroviaire (2) présente les caractéristiques suivantes :
a) un châssis de bogie (15) est prévu pour le logement de deux paires de roues (17) écartées l'une de l'autre dans une direction longitudinale (16),
b) le châssis de bogie (15) se compose de deux longerons de châssis (20) écartés l'un de l'autre par rapport à un axe de rotation (18) des paires de roues (17), présentant chacun un coussinet d'essieu (19) pour le logement d'une paire de roues (17),
c) les deux longerons de châssis (20) sont connectés l'un à l'autre entre les deux paires de roues (17) par une traverse de châssis (21),
d) deux châssis de bogie (15) écartés l'un de l'autre par rapport à la direction longitudinale (16) sont chacun connectés par un pivot de bogie (23) à un pont-portique (24) qui présente un cercle de rotation central (23) positionné entre les pivots de bogie (23) des châssis de bogie (15) pour la connexion au châssis de véhicule (4),
e) des extensomètres à résistance (22) sont prévus pour la détection d'une flexion de châssis, dans lequel
un extensomètre à résistance (22) est à chaque fois disposé sur le pont-portique (24) entre le cercle de rotation central (23) et le pivot de bogie contigu (23) du châssis de bogie adjacent (15).

8. Véhicule de pose de voie selon la revendication 7, **caractérisé en ce que** deux extensomètres à résistance (22) sont seulement disposés sur le pont-portique (24), dans lequel les deux extensomètres à résistance (22) sont positionnés de manière décalée l'un par rapport à l'autre vus dans une direction transversale s'étendant parallèlement à l'axe de rotation (18).
